# EUROPEAN PATENT SPECIFICATION

(11) **EP 2 371 445 B1**
(45) Date of publication and mention of the grant of the patent: **16.04.2014**
(21) Application number: 11159195.4
(22) Date of filing: 22.03.2011
(51) Int. Cl.: B01D 61/06

(54) **Reverse osmosis plant for the treatment of water**
Umkehrosmoseanlage zur Aufbereitung von Wasser
Installation d'osmose inversée pour le traitement de l'eau

(30) Priority: 24.03.2010 IT FI20100048
(43) Date of publication of application: 05.10.2011
(73) Proprietor: Paolini, Gino, 55061 Capannori (Lucca) (IT)
(72) Inventor: Paolini, Gino, 55061 Capannori (Lucca) (IT)
(74) Representative: Soldatini, Andrea

(56) References cited:
- WO-A1-2005/051849
- US-A- 4 086 166

## Description

The present invention refers to the field of plants for the treatment of water. More in particular, it refers to a new configuration of a plant for the desalination of water, preferably for use at home, exploiting the principle of reverse osmosis.

Over the last few years plants for the treatment of water based upon the principle of reverse osmosis have become ever more common: thanks to the use of special semipermeable membranes usually made up of synthetic materials, such plants are capable of separating the mineral salts and the polluting substances of chemical and bacterial origin from the water.

As it is known, osmosis is a spontaneous process that consists of the diffusion of a solvent through a semipermeable membrane from one compartment with greater water potential (lower concentration of solute) towards a compartment with lower water potential (greater concentration of solute), therefore, according to the concentration gradient. Osmosis is thus a spontaneous process that tends to dilute the most concentrated solution, obtaining a reduction of the concentration difference.

The spontaneous flow of the solvent can be opposed by applying pressure to the compartment with greater concentration: if the pressure applied exceeds the osmotic pressure, the phenomenon known as reverse osmosis is obtained.

Reverse osmosis is thus the phenomenon that occurs when a pressure difference opposite to the osmotic pressure and greater that it is applied to the surface of the semipermeable membrane that separates the two solutions with different concentration, so that the flow of the solvent occurs from the most concentrated solution to the most diluted one (contrarily to what would spontaneously occur).

Reverse osmosis is to this day one of the most used technologies to make sea water drinkable and to purify water from aqueducts so as to be able to use it in domestic applications.

The special semipermeable membranes used for the process of separating foreign bodies from the water are usually of the wound spiral type made from synthetic materials. Generally, they have an average porosity of only 0.0005 µm, they withstand a pH range that varies from 4 to 11, a maximum temperature of 50°C, whereas they have limited resistance to sediments, to chlorine (>0.1 mg/l), to iron (>0.25mg/l) and to the total hardness. The removal of the salts and of the dissolved substances is of about 97-99.9% with respect to those initially contained in raw water with a life of the membrane of about 5 years. In order to increase the life of the membrane, water is pre-filtered before being delivered to the module containing the actual membrane carrying out the reverse osmosis process. The pre-filtering is carried out with filters and cartridges made from polypropylene fibres, which efficiently remove the sediments, sand, solids in suspension etc., from the water. Such pre-treatment plants (such as clarifying filters, iron removal filters, dechlorination filters, softener filters etc.) are located upstream of the reverse osmosis purification and are designed based upon the type of water to be treated and upon the end use it is intended for.

After such a pre-treatment, the water is delivered to the tank containing the osmotic membrane through a high pressure pump.

Due to the pressure, only a part of purified water containing a minimal concentration of salts will pass through the membrane, whereas the remaining concentrated part of salts and undesired substances will be conveyed to the discharge.

The water purified and intended to be delivered to end users, takes the name of "permeate" and has a saline content that is decreased by 97-99%, with respect to the initial water (raw water). The remaining part of liquid, rich in salts and polluting substances takes the name of "concentrated fluid" and has a concentration of salts that is on average double with respect to raw water. The concentrated fluid carries out a continuous washing of the membrane, ensuring that the system has operated for a long time before requiring a chemical cleaning or to the replacement of the membrane itself.

Plants of this kind allow both domestic and industrial end users to desalinate waters delivered from the mains water supply, such as aqueducts or private wells, all whilst maintaining small bulk. As it is known, such water is rarely used by the user, since it is not drinkable or because it simply tastes unpleasant. The user thus purchases bottled mineral water. Buying it is expensive and can have a substantial impact on the budget of a normal family, there are logistic and environmental problems due to the need of transporting the bottles, as well as the need of disposing of the empty containers. Vice versa, by using reverse osmosis desalination plants, the water of the aqueduct is mineral-reduced, becoming pleasant to drink and thus not forcing the user to purchase packed bottles, with a consequent considerable saving in terms of money in addition to obvious practical and environmental advantages.

However, in known plants, of the direct delivery type (i.e. without storage) there are currently problems that can be fundamentally traced back to idle time of the plant.

Following a pause from operation there is in particular a substantial increase in the level of residual salinity of the permeate. Indeed, after an idle period of the plant, not necessarily very long, at the moment of the first new delivery to the user, the salinity of the permeate tends to increase to then drop again, indicatively generally after about 30-60 seconds of continuous operation (of course the duration of such a transient is directly proportional to the duration of the idle period and the values indicated should be considered the maximum ones).

Such an event is strictly related to the physical principles that regulate the osmosis phenomenon: during idle time the two saline solutions with different concentration stagnating inside the membrane, tend to balance their level of concentration passing through the membrane itself, with the consequence that the salinity of the permeate increases until a balance has been reached.

A first elementary solution to such a problem is that of letting the water flow for the time necessary for the permeate to take up a satisfactory salinity level again. Such a solution however leads to a considerable waste of water (the water with excess salinity that is dispersed in the transient), as well as the inconvenience of waiting that, as mentioned, can be substantial. Moreover, downstream of such plants, refrigerators and/or fizzing machines (carbonators) of the water that has undergone osmosis can be arranged: in this case the dispersion of water during the transient step also leads to a considerable waste of energy related to the face that such refrigeration and/or fizzing systems absorb electric current, carrying out their work on water that shall not be used in any case.

A second solution proposed by the prior art is that of foreseeing a system of pipes and valves for the automatic recirculation of the permeate upstream of the pressurization pump. The recirculation is carried out until the level of salinity of the permeate drops below the desired limit. However, even in this case, during the recirculation step, the delivery of water is stopped for a period, indicatively, of about 30-60 seconds, thus not providing service to the user.

From US patent US4086166 it is also known, in an apparatus for filtering water, for there to be a plenum system through which, at the beginning of the delivery, filtered water previously stored in the plenum chamber is delivered, with the concentrated fluid by-product of the filtration that is used as motor fluid to obtain the delivery from the plenum. However, such an apparatus, conceived to minimize the wastage of filtered water, does not tackle, and is not structured to solve, the problem of controlling the salinity, nor does it ensure a precise control of the flow rate of the filtered water delivered in the step of delivery from the plenum chamber.

The purpose of the present invention is thus that of solving the problems outlined above, by providing a plant for the treatment of fluids, such as water, exploiting the principle of reverse osmosis, of the type with direct delivery, which makes it possible to keep the salinity of the permeate constant within acceptable limits even following idle time of the plant itself and does not have problems of stopping or discontinuing the service without however the need of substantial transformations of the base plant currently used and without increasing its bulk.

Such purposes are achieved with a method for carrying out a reverse osmosys treatment in a direct delivery plant according to the invention, having the essential characteristics defined in the first of the attached claims.

The characteristics and advantages of the automatic control method for carrying out a reverse osmosys treatment in a direct delivery plant according to the invention shall become clearer from the following description of one of its embodiments, given as an example and not for limiting purposes, with reference to the attached drawings in which:
- figure 1 is a functional diagram of the plant for treating water with reverse osmosis controlled according to the invention; and
- figure 2 represents a longitudinal section view of a pressurised tank for the storage of water that has undergone osmosis used in the plant controlled according to the invention.

With reference to said figures, a plant for treating water (or other fluids with analogous characteristics) using the principle of reverse osmosis, with direct delivery, according to the invention has an overall configuration that is like the conventional one, including a device with membrane for reverse osmosis, generally indicated with reference numeral 1, comprising a water-tight recipient 1a containing a reverse osmosis membrane not shown in the figure, inside it.

The recipient 1 a is generally a plastic container with an opening, such as a screw lid 1b, for checking, for maintenance and/or for replacement of the reverse osmosis membrane contained inside it.

Upstream of the device with a membrane 1 and downstream of an input of raw water (delivered, for example, from aqueducts or other private water system, even industrial), indicated with INAG, there is, according to a typical embodiment, a pre-treatment stage wholly indicated with reference numeral 2, delimited with a broken line.

Such a pre-treatment stage 2 is on a feeding line AG (represented in the figure by a dotted and dashed bold line) that makes it possible to transport the raw water from the input INAG to the membrane device 1. In detail, downstream of the input INAG and upstream of interception means such as, for example, a feeding electrovalve 21, a safety filter 20 is arranged used for eliminating sand, sediments and other coarse substances in suspension that could cause the electrovalve 21 to become blocked. Such a filter 20 can for example be made up of filters with stainless steel cartridges that can be washed with a capacity of about 150 µm.

The electrovalve 21 intercepts the flow of raw water in input to the plant; it is usually of the solenoid type and is automatically controlled by a control unit that can be programmed with an electronic card (not shown in the figure) that manages the plant as shall be described further in the rest of the description.

The fluid thus partially treated enters into the first pre-filtering stage carried out by a sediment filter 23. Such a filter 23 is usually made up of a filtering cartridge in microfibre with filtering capability of up to 5 µm, capable of eliminating sand, earth, rust and all the substances that can be sedimented in suspension that would otherwise obstruct the reverse osmosis membrane.

Downstream of the sediment filter 23 there is a second pre-filtering stage with an activated carbon filter 24 that eliminates the residual free chlorine possibly present in the water, and moreover purifies the water from unpleasant smells and tastes.

The pre-filtered water passes through a booster pump 25 that has the task of delivering the pressurised fluid to the membrane device 1. The pump 25 is preferably a pressurization pump with a diaphragm that makes it possible to deliver the water to the membrane with a constant flow rate and it is particularly suitable especially in aqueducts where the pressure of the water supply is poor. The pump is controlled automatically by the control unit; moreover, a low pressure switch 22, located downstream of the electrovalve 21 and upstream of the filter of the first pre-treatment stage 23, controls the minimum pressure of the feeding water and, if its level drops below the set value, through the control unit, it stops the operation of the pressurization pump and sends an alarm signal to the user.

As already mentioned, the booster pump 25 sends the fluid to the membrane device 1. A manometer 5 displays the feeding pressure applied to the reverse osmosis membrane so as to monitor the efficiency of the pressurization pump and of the feeding circuit (AG).

Inside the recipient 1a, the membrane makes it possible to separate the water that has undergone osmosis (or permeate) from that with greater concentration. The energy and the force necessary to make the pure water pass through the membrane and to allow the fluid to be cleaned is that provided by the booster pump 25.

In outlet from the device 1 with reverse osmosis, two lines come out, one for delivering the permeate to the user (wholly indicated with UT and represented through a continuous and bold line), the other for discharging (wholly indicated with SC and represented with a broken and bold line) to discharge the concentrated fluid outside the plant.

Before being delivered to the user, the permeate is mixed with a quantity of water drawn in outlet from the booster pump, therefore with greater salinity. This mixing makes it possible to regulate the amount of desired salinity of the permeate provided for delivery. Such a level of salinity is predetermined through a valve 6 for regulating the flow of water that has not yet undergone osmosis, drawn downstream of the booster pump 25.

Downstream of the valve 6 for regulating the salinity, the pipe UT for delivering the permeate to the user is intercepted by a delivery electrovalve 7 that regulates the flow of the permeate to the user. Such a valve 7 is usually coupled with a check valve 8, which prevents the liquid from flowing back along the pipe UT.

The permeate finally passes through, again in accordance with a typical example embodiment, a last treatment step carried out by a sterilizer 9. The sterilizer 9 eliminates bacteria in the permeate. It usually comprises a UV light that carries out the function of sterilizing. The delivery of the permeate to the sterilizer 9 is regulated by a high pressure switch 10 that controls the actuation and the halting of the delivery of water that has undergone osmosis. When a delivery tap (not shown) downstream of the plant is closed (i.e. the demand for delivery of the water is interrupted), the pressure switch, through the control unit to which it is connected, interrupts the delivery of the permeate when a value of maximum set pressure (commonly 2.5 bar) has been reached.

A meter 17 checks the amount of water that has undergone osmosis progressively delivered to the user. The meter 17 is connected to the control unit which, when a set value of water volume dispensed has been reached, indicates, for example through an indicator light that can be seen by the user, the necessity of replacing the filters and of carrying out maintenance operations. Finally, the permeate is delivered to the user through the outlet mouth OUTPE.

Analogously, on the discharge pipe SC there is a flow regulator of the discharge water 13 associated, downstream, to a check valve 15 so as to prevent the discharge liquid from flowing back inside the pipe. The discharge liquid is thus sent to an outlet of the plant OUTSC.

The plant again comprises a permeate recirculation system upstream of the booster pump 25 to allow the level of salinity of the permeate to drop when the plant is idle over a certain time period. In order to carry out such a recirculation, a recirculation line RC is foreseen from the delivery line UT of the permeate at the outlet from the recipient 1a but upstream of the interception valve 7.

On the drawing line RC there is an interception element in the form of an electrovalve 11, which by opening (i.e. by placing the line UT in communication with the feeding line AG sent to the pump 25) makes it possible to draw the permeate. A check valve 12 is commonly associated to the electrovalve 11, said check valve preventing the inversion of the permeate recirculation flow inside the pipe RC. Thanks to such a system, when required, the permeate can transit two or more times in the device 1 before being delivered to the user, so as to undergo many osmosis steps.

Finally, in order to carry out low pressure washing of the membrane, suitable at the end of every delivery cycle and in case of inactivity, there is a flushing electrovalve 14 that intercepts a bypass line of the flow regulator of the discharge water 13.

As already mentioned, all the electrovalves and the pressure switches are controlled by a control unit (not shown in the figures) that manages the plant autonomously and makes it possible to send signals to the user for managing the operation and the maintenance of the single components.

The plant integrates a storage tank 3 on a line CO1-CO2 that puts the discharge line SC in communication with the delivery line to the user UT downstream, respectively, of the flow regulator 13 and of the delivery electrovalve 7. Moreover, on the discharge line SC a supplementary electrovalve 4 is foreseen, downstream of the bypass with the flushing electrovalve 14.

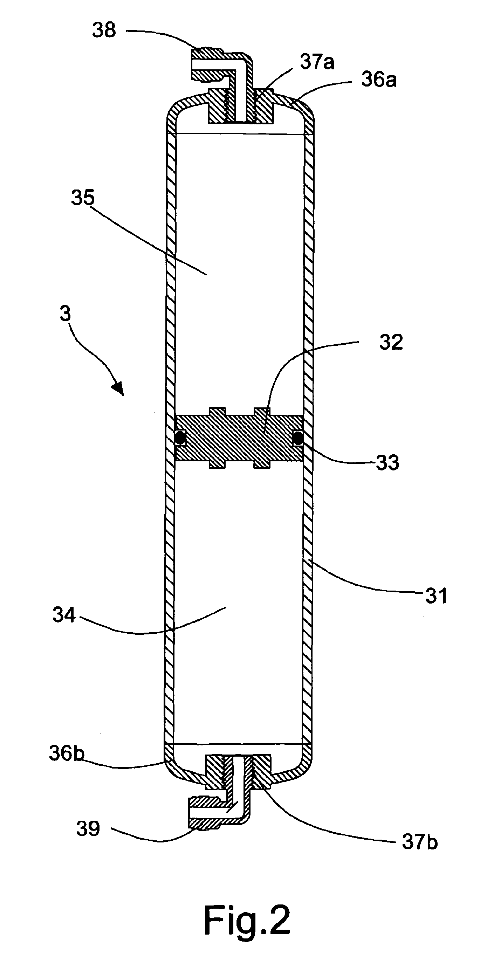

In greater detail, with particular reference to figure 2, the pressurised storage tank 3 of the water that has undergone osmosis is made up of a jacket 31 made for example by an internally rectified tubular and is made in non-toxic and corrosion-proof plastic material, having a thickness such as to hold out the maximum pressure of the plant.

Inside the jacket 31 a mobile piston 32 is inserted, also preferably made from non-toxic and corrosion-proof plastic material, complete with a water-tight gasket 33 such as a rubber O-ring. The gasket 33 encloses the entire circumference of the piston 32 and allows there to be a hydraulic separation between a first chamber 34 and a second chamber 35 formed inside the jacket 31 by the piston 32 itself. The storage capability of each inner chamber 34, 35 varies automatically according to the movement of the piston 32 that thanks to the pressure applied alternately by the permeate and by the concentrated fluid, as shall soon become clearer, obtains the emptying and the filling of one and the other chamber.

In the example illustrated, in order to allow the insertion of the piston 32 inside the jacket 31, the two ends of the tubular jacket 31 have end caps 36a and 36b fixed by, for example, gluing and/or heat-sealing. The end caps 36a and 36b are made from material that is analogous to the rest of the tubular jacket 31 and have the same mechanical characteristics (pressure resistance).

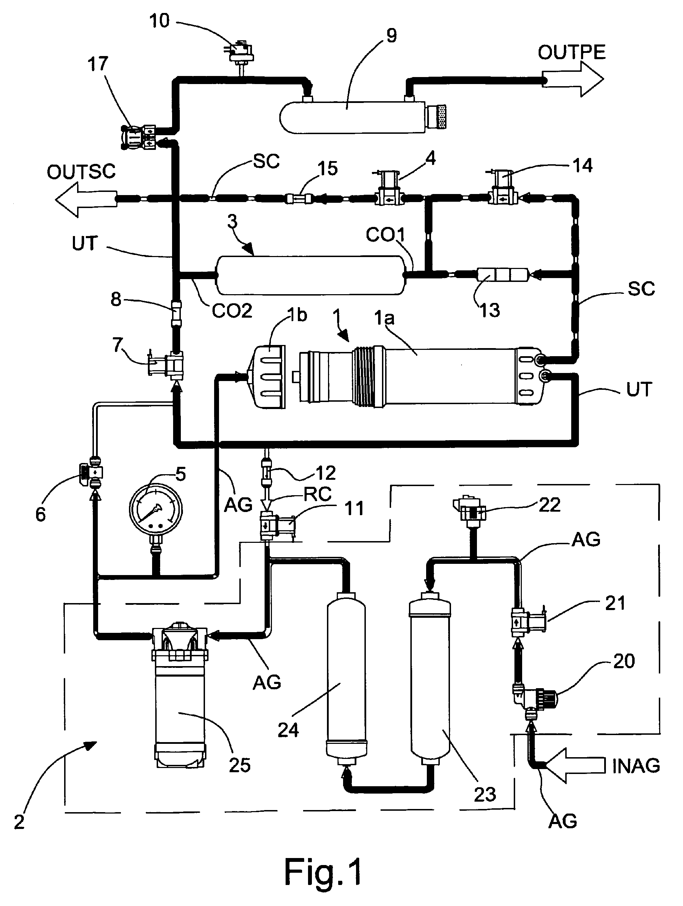

On the end caps 36a, 36b respective threaded holes 37a, 37b are formed for the installation of threaded fittings necessary for the connection, respectively, of a pipe 38 for the inflow/outflow of the permeate and of a pipe 39 for the inflow/outflow of concentrated fluid to the hydraulic circuit of the reverse osmosis system, which respectively correspond to the lines CO2 and C01 shown in figure 1 and previously mentioned. The assembly of the tank 1 is thus made so that the chamber 34, through the pipe 39/line C01 hydraulically communicates with the line SC of concentrated fluid downstream of the flow rate regulator 13, whereas the chamber 35 opposite the first one, is in hydraulic communication through the tube 38/line CO2 with the line UT of water that has undergone osmosis downstream of the check valve 8.

The plant previously described thus is controlled according to the invention so as to operate in the following manner.

During the steps of delivery of the permeate (tap for intercepting the permeate downstream of the plant, open) the electrovalves 21, 7, 4 are open, whereas the electrovalves 14, 11 are closed. The permeate is delivered to the user until the tap downstream of the system has been closed.

At the end of the delivery step, the permeate is automatically conveyed inside the chamber 35 of the pressurised tank 3 for storing the water that has undergone osmosis. During the filling of the chamber 35 of the tank, the water-tight mobile piston 32, undergoing the thrust pressure of the permeate, is made to slide on the tubular jacket 31 until the chamber 35 is completely full and the mobile piston 32 has reached the end stop adjacent to the cap 36b. Due to the effect of the pressure exerted by the filling of the chamber 35, the concentrated liquid contained in the opposite chamber 34 is freely discharged in SC.

When the chamber 35 of the pressurised tank 3 for storing the water that has undergone osmosis is full and the pressure inside the chamber reaches a certain value (for example about 3 bar), detected through the high pressure switch 10, the automatic flushing step of the reverse osmosis membrane is actuated and the delivery of the permeate from the device 1 is simultaneously interrupted. Such a command can be activated even through the detection of the flow rate. During the step of flushing/washing the membrane, in addition to the electrovalves 21, 7, 4, also the electrovalve 14 is open, whereas the electrovalve 11 is closed. The opening of the electrovalve 14 causes the pressure inside the osmotic module to drop, and as a consequence, the delivery of the permeate is interrupted.

Until the tap for intercepting the permeate downstream of the system is reopened, the plant remains in stand-by and all the functions are disabled.

Following a new demand for water that has undergone osmosis from the user, the high pressure switch 10, through the control unit, automatically controls the actuation of the pressurization pump 25 and the production of water that has undergone osmosis is consequently restarted. During this step there is a recirculation of the permeate and the electrovalves 21 and 11 are open, whereas the electrovalves 14, 7, 4 are closed.

In particular it should be noted, how, according to the invention and advantageously, the closure of the valve 7 stops the delivery of the permeate from the device 1, the delivery of water to the user being completely carried out by the pressurised storage tank for the water that has undergone osmosis without any interruption of the service and with water having the desired salinity characteristics. The outlet flow rate of the permeate from the storage tank is regulated automatically by the concentrated fluid discharge regulator 13 and since the amount of water discharged by the system is usually only about 50% of the total fed raw water, the outlet flow rate of water that has undergone osmosis from the storage tank is the same as that produced instantaneously by the reverse osmosis membrane during the normal operation of the plant.

The emptying of the storage tank 3 of the water that has undergone osmosis is made possible by the electrovalve 4 that by closing the discharge pipe SC of the concentrated fluid forces the flow of the latter to forcibly enter inside the chamber 34 of the tank 3. During the filling of the chamber 34 of the tank, the water-tight mobile piston 32, undergoing the thrust pressure of the flow of concentrated fluid, is forced to slide and consequently pushes the permeate outside of the chamber 35 previously filled until the chamber 35 is completely empty and the mobile piston 32 has reached the end stop of the cap 36a.

In any case, the volume of the storage tank 3 of the water that has undergone osmosis and the output flow rate of the water from the tank are calibrated so as to ensure the delivery of water that has undergone osmosis to the user during the entire recirculation step that has usually a duration of about 30-60 seconds.

At the end of the recirculation step the plant continues to deliver water that has undergone osmosis to the user again just as described previously according to the prior art.

The advantages of the plant with reverse osmosis for the treatment of water according to the invention are clear from what has been described. The permeate is always available to the user and has the desired degree of salinity even after idle time and especially during the osmotic flow that, after such idle time, tends to balance the concentration level again (and therefore during the recirculation of the permeate upstream of the pressurization pump foreseen to solve such a drawback).

The plant is also structurally simple, i.e. with elementary type structural modifications with respect to known plants, and has small bulk which allow it to be used even in domestic applications (for example for the classic installation below the sink).

A further advantage is that the tank 3 is a tank with small storage containing only the quantity of fluid that has undergone osmosis necessary to get through the transient when the plant is activated again: in addition to the small bulk therefore, there is not an actual stagnation of a substantial amount of fluid that has undergone osmosis, and consequently the delivery of the permeate to the user can be still considered of the direct type.

The plant previously described, in its design characteristics, should be considered purely as an example. Plants with greater dimensions, can be used even for industrial applications or on public water mains. Moreover, also fluids different from water can be treated, wherever osmosis needs to be carried out.

The present invention has been described with reference to its preferred embodiments. It should be understood that there can be other embodiments that belong to the same inventive core, all covered by the scope of protection of the following claims.

## Claims

1. An automatic control method for carrying out a reverse osmosys treatment of a raw fluid in a direct delivery plant, the plant comprising: a reverse osmosys device (1) for carrying out a reverse osmosis treatment on said raw fluid so as to produce a permeate fluid and a concentrated fluid from said raw fluid; a feeding circuit (AG) of said raw fluid; pump means (25) for receiving the raw fluid from said feeding circuit and feeding it under pressure to said reverse osmosys device (1); two flow lines branching out from said reverse osmosys device (1), respectively consisting of a discharge line (SC) for directly discharging said concentrated fluid outside of said plant, and a delivery line (UT) for the delivery of said permeate to end users, said line ending with a delivery tap; a connection line (CO1-CO2) that hydraulically connects said delivery line (UT) of permeate with said discharge line (SC) of concentrated fluid; a tank (3) for provisionally storing an amount of said permeate fluid on said connection line (CO1-CO2), said tank comprising two hydraulically isolated chambers, that is a permeate fluid chamber (35) and a concentrated fluid chamber (34), said chambers (35, 34) being arranged in communication respectively with said delivery line (UT) of permeate and said discharge line (SC) of concentrated fluid, and being separated by mobile means (32), so that when one chamber expands the other chamber becomes smaller; means (7) for intercepting the delivery on said delivery line (UT) of permeate upstream of said connection line (CO1-CO2); a recirculation line of the permeate (RC) that puts said delivery line in communication, upstream of said means (7) for intercepting the delivery of the permeate with said feeding circuit (AG), said permeate recirculation line (RC) being intercepted by means for intercepting the recirculation (11); the method comprising: when said tap is closed: controlling the filling of said permeate fluid chamber (35), by keeping said interception means (7) of the permeate open and said means for intercepting the recirculation of the permeate (11) closed, and discharging the concentrated liquid contained in the relative chamber (34) outside through said discharge line (SC) of concentrated fluid; when said permeate fluid chamber (35) is completely filled with the permeate, flushing the reverse osmosys device (1); when said tap is opened again: closing said discharge line (SC) of concentrated fluid downstream of said connection line (CO1-CO2) to deviate the concentrated fluid inside said concentrated fluid chamber (34); causing the filling of said concentrated fluid chamber (34), with simultaneous deviation of said permeate fluid from the reverse osmosys device (1) towards said recirculation line (RC), by opening said means for intercepting the recirculation of the permeate (11), and closing said means for intercepting the delivery of the permeate (7), so that, for a certain time period, exclusively permeate fluid coming out from said permeate fluid chamber (35) reaches the end users, with a controlled salinity and a flow rate that is equal to the flow rate of the concentrated fluid to said concentrated fluid chamber (34), until the delivery conditions are restored with the reopening of the means for intercepting the delivery of the permeate (7) and of the discharge line (SC), and the closure of said means for intercepting the recirculation of the permeate (11).

2. The method according to claim 1, wherein on said discharge line (SC) of concentrated fluid, upstream of said connection line (CO1-CO2) it is provided a flow regulator (13) of the discharge water, which can be bypassed by said concentrated fluid through a bypass line of the regulator, branching off upstream of said means for intercepting the discharge (4) and intercepted by a flushing electrovalve (14), said flushing of the reverse osmosys device being carried out by opening said flushing electrovalve (14) when a certain pressure value detected following said filling of said permeate fluid chamber (35) has been reached, or following the detection of zero flow rate in said delivery line (UT) of permeate upstream of said connection line (CO1-CO2), for starting up an automatic flushing step of the membrane of said device.

3. The method according to claim 2, wherein said tank ensures the delivery of the permeate fluid accumulated for at least 30 seconds.

4. The method according to any of the previous claims, wherein said mobile means (32) for separating said chambers (34, 35) in said storage tank (3) comprise a piston (32) that slides inside said tank.

5. The method according to any of the previous claims, wherein on said feeding line (AG) and upstream of said reverse osmosys device (1) said raw fluid undergoes a pre-treatment of a safety filter (20), a sediment filter (23) such as a microfibre filter located downstream of said safety filter (20), and an activated carbon filter (24) located downstream of said sediment filter (23) and upstream of said pump means (25).

## Patentansprüche

1. Automatisches Steuerverfahren zum Ausführen einer Umkehrosmosebehandlung eines Ausgangsfluids in einer Direktlieferanlage, wobei die Anlage enthält: eine Umkehrosmosevorrichtung (1) zum Ausführen einer Umkehrosmosebehandlung an dem Ausgangsfluid, um ein Permeatfluid und ein Konzentratfluid von dem Ausgangsfluid herzustellen; einen Zufuhrkreislauf (AG) des Ausgangsfluids; Pumpeinrichtungen (25), um das Ausgangsfluid von dem Zufuhrkreislauf zu erhalten und es unter Druck der Umkehrosmosevorrichtung (1) zuzuführen; zwei Strömungsleitungen, die von der Umkehrosmosevorrichtung (1) abzweigen, entsprechend bestehend aus einer Ausgabeleitung (SC) zum direkten Ausgeben des Konzentratfluids nach außerhalb der Anlage und einer Lieferleitung (UT) zur Lieferung des Permeats zu Endnutzern, wobei die Leitung mit einem Lieferhahn endet; eine Verbindungsleitung (C01 - CO2), die die Lieferleitung (UT) des Permeats mit der Ausgabeleitung (SC) von Konzentratfluid hydraulisch verbindet; einen Tank (3), um provisorisch eine Menge des Permeatfluids auf der Verbindungsleitung (C01 - CO2) zu speichern, wobei der Tank zwei hydraulisch isolierte Kammern enthält, die eine Permeatfluidkammer (35) und eine Konzentratfluidkammer (34) sind, wobei die Kammern (34, 35) in Kommunikation entsprechend mit der Lieferleitung (UT) des Permeats und der Ausgabeleitung (SC) von Konzentratfluid angeordnet sind und durch mobile Einrichtungen (32) separiert sind, so dass, wenn sich eine Kammer ausdehnt, die andere Kammer kleiner wird; Einrichtungen (7) zum Unterbrechen der Lieferung auf der Lieferleitung (UT) des Permeats stromaufwärts der Verbindungsleitung (C01 - CO2); eine Rezirkulationsleitung (RC) des Permeats, die die Lieferleitung stromaufwärts der Einrichtungen (7) zum Unterbrechen der Zufuhr des Permeats in Kommunikation mit dem Zufuhrkreislauf (AG) versetzt, wobei die Permeatrezirkulationsleitung (RC) durch Einrichtungen (11) zum Unterbrechen der Rezirkulation unterbrochen wird; wobei das Verfahren enthält: wenn der Hahn geschlossen ist: Steuern des Füllens der Permeatfluidkammer (35), indem die Unterbrechungseinrichtungen (7) des Permeats offen und die Einrichtungen zum Unterbrechen der Rezirkulation des Permeats geschlossen gehalten werden, und Ausgeben der Konzentratflüssigkeit, die in der entsprechenden Kammer (34) enthalten ist, nach außen durch die Ausgabeleitung (SC) von Konzentratfluid; wenn die Permeatfluidkammer (35) vollständig mit dem Permeat gefüllt ist, Spülen der Umkehrosmosevorrichtung (1); wenn der Hahn wieder offen ist: Schließen der Ausgabeleitung (SC) von Konzentratfluid stromabwärts der Verbindungsleitung (C01 - CO2), um das Konzentratfluid innerhalb der Konzentratfluidkammer (34) abzuleiten; Veranlassen des Füllens der Konzentratfluidkammer (34) mit gleichzeitiger Ableitung des Permeatfluids von der Umkehrosmosevorrichtung (1) zu der Rezirkulationsleitung (RC) hin durch Öffnen der Einrichtungen (11) zum Unterbrechen der Rezirkulation des Permeats und Schließen der Einrichtungen (7) zum Unterbrechen der Lieferung des Permeats, so dass für eine bestimmte Zeitperiode ausschließlich Permeatfluid, das aus der Permeatfluidkammer (35) heraus kommt, die Endnutzer erreicht, mit einem gesteuerten Salzgehalt und einer Strömungsrate, die gleich der Strömungsrate des Konzentratfluids zu der Konzentratfluidkammer (34) ist, bis die Lieferbedingungen mit dem Wiederöffnen der Einrichtungen (7) zum Unterbrechen der Lieferung des Permeats und der Ausgabeleitung (SC) und dem Schließen der Einrichtungen (11) zum Unterbrechen der Rezirkulation des Permeats wiederhergestellt sind.

2. Verfahren nach Anspruch 1, wobei auf der Ausgabeleitung (SC) von Konzentratfluid stromaufwärts der Verbindungsleitung (CO1 - CO2) ein Strömungsregulator (13) des Ausgabewassers vorgesehen ist, der von dem Konzentratfluid durch eine Umgehungsleitung des Regulators umgangen werden kann, die stromaufwärts der Einrichtungen (4) zum Unterbrechen der Ausgabe abzweigt und durch ein Spülelektroventil (14) unterbrochen ist, wobei das Spülen der Umkehrosmosevorrichtung durch Öffnen des Spülelektroventils (14) ausgeführt wird, wenn ein bestimmter Druckwert, der auf das Füllen der Permeatfluidkammer (35) hin detektiert wurde, erreicht wurde, oder nachfolgend auf die Detektion einer Null-Strömungsrate in der Lieferleitung (UT) von Permeat stromaufwärts der Verbindungsleitung (C01 - CO2), um einen automatischen Spülschritt der Membrane der Vorrichtung anlaufen zu lassen.

3. Verfahren nach Anspruch 2, wobei der Tank die Lieferung des Permeatfluids sicherstellt, das für wenigstens 30 Sekunden angesammelt wurde.

4. Verfahren nach einem der vorhergehenden Ansprüche, wobei die mobilen Einrichtungen (32) zum Separieren der Kamemrn (34, 35) in dem Speichertank (3) einen Kolben (32) enthalten, der sich innerhalb des Tanks verschiebt.

5. Verfahren nach einem der vorhergehenden Ansprüche, wobei auf der Zufuhrleitung (AG) und stromaufwärts der Umkehrosmosevorrichtung (1) das Ausgangsfluid eine Vorbehandlung eines Sicherheitsfilters (20), eines Sedimentfilters (23), wie etwa eines Mikrofaserfilters, der stromabwärts des Sicherheitsfilters (20) angeordnet ist, und eines Aktivkohlefilters (24), der stromabwärts des Sedimentfilters (23) und stromaufwärts der Pumpeinrichtungen (25) angeordnet ist, durchmacht.

## Revendications

1. Un procédé de commande automatique pour effectuer un traitement par osmose inverse d'un fluide brut dans une unité de distribution en direct, l'unité de distribution comprenant : un dispositif d'osmose inverse à membrane (1) pour effectuer un traitement par osmose inverse du dit fluide brut afin de produire, à partir de ce dit fluide brut, un fluide filtré et un fluide concentré ; un circuit d'alimentation (AG) en ce dit fluide brut ; des moyens de pompage (25) pour recevoir le fluide brut en provenance du dit circuit d'alimentation et alimenter sous pression ledit dispositif d'osmose inverse (1) ; deux lignes d'écoulement branchées sur ledit dispositif d'osmose inverse (1), consistant respectivement en une ligne d'évacuation (Sc) pour évacuer directement ledit fluide concentré hors de ladite unité, et une ligne de distribution (UT) pour distribuer ledit fluide filtré à des utilisateurs finals, ladite ligne se terminant avec une robinet de distribution ; une ligne de connexion (CO1-CO2) qui relie hydrauliquement ladite ligne de distribution (UT) du fluide filtré à ladite ligne d'évacuation (Sc) du fluide concentré ; un réservoir (3) pour stocker provisoirement une quantité de dit fluide filtré sur ladite ligne de connexion (CO1-CO2), ledit réservoir comportant deux chambres hydrauliquement isolées, à savoir une chambre pour le fluide filtré (35) et une chambre pour le fluide concentré (34), lesdites chambres (35, 34) étant agencées de façon à communiquer respectivement avec ladite ligne de distribution (UT) du fluide filtré et ladite ligne d'évacuation (Sc) du fluide concentré, et étant séparées par des moyens mobiles (32), de façon que lorsqu'une chambre s'agrandit l'autre chambre diminue ; des moyens (7) pour arrêter la distribution sur ladite ligne de distribution (UT) du fluide filtré en amont de ladite ligne de connexion (CO1-CO2) ; une ligne de recyclage du fluide filtré (RC) qui met ladite ligne de distribution en communication, en amont des dits moyens (7) pour arrêter la distribution du fluide filtré, avec ledit circuit d'alimentation (AG), ladite ligne de recyclage du fluide filtré (RC) étant interceptée par des moyens (11) pour arrêter le recyclage ; le procédé comprenant : quand ledit robinet est fermé : la commande du remplissage de ladite chambre de fluide filtré (35), en maintenant lesdits moyens d'arrêt (7) du fluide filtré ouverts et lesdits moyens (11) pour arrêter le recyclage du fluide filtré fermés, et l'évacuation du fluide concentré contenu dans la chambre correspondante (34) via ladite ligne d'évacuation (Sc) du fluide concentré ; quand ladite chambre de fluide filtré (35) est complètement remplie avec du fluide filtré, le rinçage du dispositif d'osmose inverse (1) ; quand ledit robinet est à nouveau ouvert : la fermeture de ladite ligne d'évacuation (Sc) du fluide concentré en aval de ladite ligne de connexion (CO1-CO2) pour dévier le fluide concentré dans ladite chambre de fluide concentré (34) ; le remplissage de ladite chambre de liquide concentré (34), avec simultanément la déviation du dit fluide filtré en provenance du dispositif d'osmose inverse (1) vers ladite ligne de recyclage (RC), en ouvrant lesdits moyens (11) pour arrêter le recyclage du fluide filtré et en fermant lesdits moyens (7) d'arrêt de la distribution de fluide filtré, de façon que, pendant une certaine période de temps, seul le fluide filtré sortant de ladite chambre de fluide filtré (35) atteigne les utilisateurs finals, avec une salinité contrôlée et un taux de débit qui est égal au taux de débit du fluide concentré vers ladite chambre de fluide concentré (34), jusqu'à ce que les conditions de distribution soient reconstituées avec la réouverture des moyens d'arrêt de la distribution du fluide filtré (7) et de la ligne d'évacuation (Sc), et la fermeture des dits moyens pour arrêter le recyclage du fluide filtré (11).

2. Le procédé selon la revendication 1, où, sur ladite ligne d'évacuation (Sc) du fluide concentré, en amont de ladite ligne de connexion (CO1-CO2), est prévu un régulateur de débit (13) de l'eau d'évacuation, qui peut être contourné par ledit fluide concentré via une ligne bipasse sur le régulateur, en dérivation en amont des dits moyens d'arrêt de l'évacuation (4) et passant par une électrovanne de rinçage (14), ledit rinçage du dispositif d'osmose inverse étant effectué en ouvrant ladite électrovanne de rinçage (14) quand la pression détectée après ledit remplissage de ladite chambre de fluide filtré (35) a atteint une certaine valeur, ou après la détection d'un taux de débit nul dans ladite ligne de distribution (UT) de fluide filtré en amont de ladite ligne de connexion (CO1-CO2), pour débuter une étape de rinçage automatique de la membrane du dit dispositif.

3. Le procédé selon la revendication 2, où ledit réservoir assure la distribution du fluide filtré accumulé pendant au moins 30 secondes.

4. Le procédé selon l'une quelconque des revendications précédentes, où lesdits moyens mobiles (32) pour séparer lesdites chambres (34, 35) dans ledit réservoir de stockage (3) comportent un piston (32) qui coulisse à l'intérieur du dit réservoir.

5. Le procédé selon l'une quelconque des revendications précédentes, où, sur ladite ligne d'alimentation (AG) et en amont du dit dispositif d'osmose inverse (1), ledit fluide brut subit un prétraitement par un filtre de sécurité (20), un filtre sédiment (23) comme un filtre de microfibres situé en aval du dit filtre de sécurité (20), et un filtre à charbon actif (24) situé en aval du dit filtre sédiment (23) et en amont des dits moyens de pompage (25).
